# EUROPEAN PATENT APPLICATION

(11) **EP 1 202 549 A2**
(43) Date of publication of application: **02.05.2002**
(21) Application number: 01203996.2
(22) Date of filing: 19.10.2001
(51) Int. Cl.: H04N 1/00

(54) **A method and apparatus for long term document preservation**

(30) Priority: 31.10.2000 US 703059
(71) Applicant: EASTMAN KODAK COMPANY, Rochester, New York 14650 (US)
(72) Inventor: Duncan, Robert W., Rochester, New York 14650-2201 (US); Gremke, Charles, Rochester, New York 14650-2201 (US); Markin, Jeffrey L., Rochester, New York 14650-2201 (US); Hanaoka, Clifton H., Rochester, New York 14650-2201 (US); Kaye, Harvey H., Rochester, New York 14650-2201 (US); Blish, Nelson A., Rochester, New York 14650-2201 (US); Abhyankar, Vishwas G., Rochester, New York 14650-2201 (US)
(74) Representative: Parent, Yves

(57) **Abstract**

According to one aspect of the present invention a method for long term preservation of documents includes the steps of saving at least one document in digital form. The documents are transferred in digital format to a virtual folder (14) and the virtual folder (14) is transmitted to a remote location. The virtual folder (14) is indexed (18) and converted to an analog format. The analog folder is stored on a long term storage medium such as film (22). In one embodiment of the computer containing the virtual folder (14) is swept periodically to transfer documents and folders to the storage facility (28) automatically.

## Description

This invention relates in general to preservation of documents and in particular, to long term preservation of digital documents on analog media.

Digital preservation is an emerging issue in today's rapidly evolving technology environment. Risks involved in ensuring the survival of digital documents; lack of predictability of technological obsolescence for both equipment and software; disruption of infrastructure; and vendors going out of business must be considered.

Early recognition of these issues has occurred within those organizations that deal with the long-term retention of valued information. Typical areas of concern are governments, highly regulated industries, such as pharmaceuticals, utilities, engineering, and other records that have information of high value content, such as medical records, human resource files, and research and development documents. Collaborative Electronic Notebook Systems Association (CENSA), a consortium of companies focused on the use of digital technology for the R&D community has recently released a white paper titled "Titanic 2000." This document describes the issues of digital preservation and concludes that the implications of long term storage of documents are extremely important.

The long-term survival of digital records continues to be dependent on a technology migration strategy. A migration strategy for digital document survival was published by Jeff Rothenberg of the RAND Corporation in the *Scientific American Journal* in the January 1995 issue. He later updated the article in February 1999 to further elaborate on the challenges of digital migration and the survivability of digital documents. The key characteristic which is necessary for digital document long-term survival is human readability. Regardless of what is done to make digital documents survive they must be displayed in human readable form to be of value; the authenticity and fidelity of the document must be "irrefutable" so future users of the document need not debate the validity of the document; and the survival of the digital document must be assured.

The adoption of digital information technology is expected to continue to grow at explosive rates. Estimates are that the U.S. is currently generating 3 billion e-mail messages a day which is expected to grow to 9 billion messages a day by the year 2003. The adoption rate of the Internet infrastructure indicates that more documents will be created electronically, stored electronically, and distributed electronically. As cost of digital equipment decreases and performance continues to improve, technology will become more prevalent, further adding to the increase in digital documents. Digital storage costs continue to come down at rates beyond Moore's Law and IBM predicts that disk storage costs will be under $100 for a 200 Gigabyte drive in approximately 7 years.

As these technology cost and performance improvements continue, they drive a rapid evolution of the "digital space." With each new technology quickly obsolescing the current technology in hardware, software, and media, migration risks and issues will be a growing concern for digital document survival. As each generation of technology becomes obsolete there is a significant possibility that records stored in one format, which are readable only by obsolete software or hardware will not be able to be retrieved in the future, thereby making the stored digital records useless.

The drive toward making more information available is pushing suppliers to continue to provide improved cost-performance within the digital space. This dynamic is causing a new paradigm to emerge. Historically the digital information storage paradigm had information being created "on line" at the top of the hierarchy. Then information would move to "near line," then "off line" storage as the need for fast access to the information declined. Eventually the information defaulted to paper as the long term storage methodology.

Paper as a "technology" has some significant characteristics that made it very attractive; its survivability is not technology dependent, it is human readable, and indicia of authenticity such as signatures and date are viewed as irrefutable fact. Paper is the de facto *"open and universal"* format for information preservation. Paper, however, has some problems as a long term storage media. These problems include the tremendous volume of space that is occupied by paper, flammability of the media, and depletion of natural resources in making the paper itself. Thus, paper is not a long term storage media of choice.

As the "paper technology" inherently retains these beneficial characteristics, not much thought of design and process was necessary for the survivability of valued information. There is, however, no default mechanism for digital document systems to rely on for information preservation. *"Digital documents do not survive on their own" is* a quote from a Discovery Channel program "Into the Future," which details the risks of losing digital information.

In the case of paper and film, only a single event, creation, is required for survival. The "single event" nature of survival for the analogue image ensures future users that the document image is as "original" as it was on the day it was created.

The continuing cost and performance improvements in digital technologies will continue into the foreseeable future. These continuing improvements will help to increase the adoption of digital document technologies. Additionally, the U. S. Federal Government has enacted the "Paper Reduction Act" which mandates that all Federal entities will provide paperless transaction capability (digital document systems) by the year 2003. This act will further fuel the adoption of digital document systems within the Federal Government and ultimately to markets well beyond.

The growth of digital documents has created a growing need for methods to conveniently preserve documents for long periods that encompass any technology disruptions. The documents must be preserved in a manner as to render the information stored as "irrefutable" by its nature or process.

Briefly, according to one aspect of the present invention a method for long term preservation of documents includes the steps of saving at least one document in digital form. The documents are transferred in digital format to a virtual folder and the virtual folder is transmitted to a remote location. The virtual folder is indexed and converted to an analog format. The analog folder is stored on a long term storage medium such as film. In one embodiment of the computer containing the virtual folder is swept periodically to transfer documents and folders to the storage facility automatically.

According to another embodiment of the present invention a process is disclosed by which digital document images are sent via the Internet to a service center. A digital index to the document is created and the digital document are written in analog form onto film. Documents existing in this form could last for 500 years, unalterable, human readable, and with virtually no dependencies on any technology for survival. Customers make requests for their document images which are then scanned from film and returned back via the Internet. Optionally, the records are sent CD/DVD, hardcopy, fax, etc.

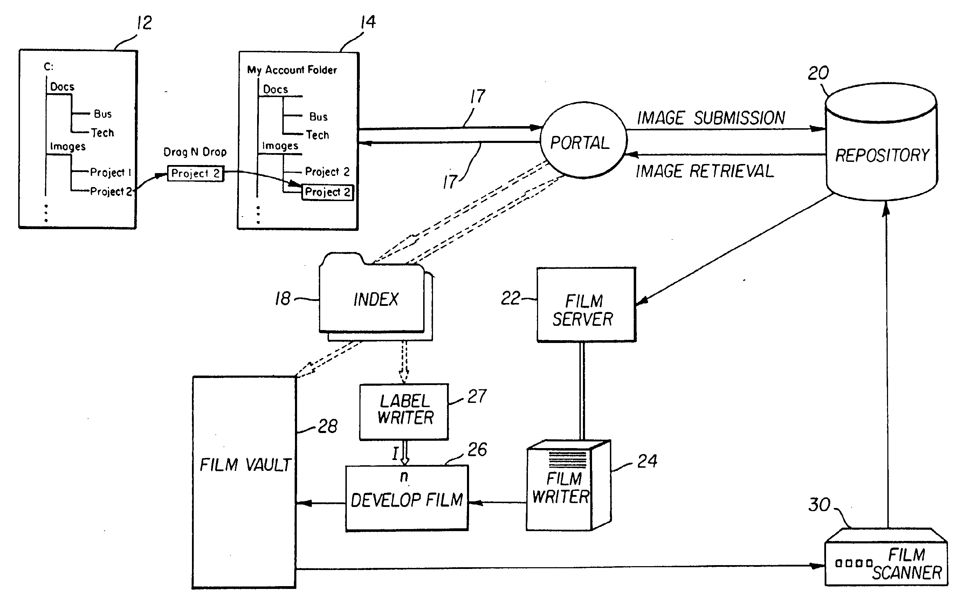

Figure 1 is a flow chart of a method for long term preservation according to the present invention.

Referring now to the Figure 1 the present invention is directed, in particular, to a method and apparatus for long term document preservation.

### Saving a Document in Digital Form

Digitally created documents are those documents that are created on the digital encoding devices such as a computer 12 systems and maintained in a digital form. Digital documents may also be created by scanning paper documents to render the information into a digital format. These digital documents are shared electronically among the various users and may or may not be subsequently printed in paper form. These documents are maintained as computer files such as .doc, .pdf, .xls, .tiff, .html, .txt etc. Some of these file formats are stand alone in the sense that one does not need to know or have access to the application software for viewing, opening, or operating on these documents or files. Others will require access to the original version of the application software to open the files.

Computer files are organized in a folder structure which contains other folders or files or both. Folder and file naming convention and the actual names are important in aiding the retrieval of folders, files, or documents. A preservation service must be capable of preserving this folder structure to make the retrieval meaningful.

### Transferring the Digital Document to a Virtual Folder

A virtual folder 14 is a unit of preservation capacity that can be bought or sold. It is similar to buying a storage box from a company. Each production preservation folder (PPF) has a unique identifier and has a fixed capacity specified as a total size of the folders, files, or documents that can be copied or stored into PPF for preservation. Once a PPF is closed and submitted for preservation services, its content can not be altered. In one embodiment, there are several predefined fields associated with each PPF. Some of these fields are mandatory but others are optional for end users to fill in. There is also a limited amount of free text area available that can be used by the end users for retrieval or any other purposes. The content of a PPF includes folder structure and files or documents.

From the retrieval perspective, an end user can request retrieval of the complete content of a PPF or use free text and the folder structure to request only a selected portion of PPF. Different sizes of PPF may be offered. For each PPF there is an original purchase price and after submission to a preservation service organization, there is an ongoing maintenance fee. Retrieval is priced on the basis of expected turnaround time. There is an additional charge for disposition of PPF.

As the name PPF implies, it is used in a production environment, which assumes the prior completion of end-to-end preservation process setup and verification to the end customers' satisfaction. The setup and verification process is aided using a setup preservation folder.

### Setup Preservation Folder (SPF)

The setup preservation folder is a simplified version of PPF suitable for testing target documents. This folder is used to test the end-to-end preservation process with the goal of setting up the production environment for document preservation. For the preservation services to become user friendly and ubiquitous, the freedom of choice of document formats for the end user in creating documents is necessary. For example, documents could be stored with extensions of .doc, .pdf, or .xls; and must be formatted differently for storage in analog form, for example .tiff. Also, the actual process of preservation is a very serious matter that requires a controlled and deterministic environment.

To bridge these two requirements SPF provides a quick turn around time to test the middleware software routines. In majority of the cases the standard supported by a preservation platform is adequate for the middleware software. Once the test documents are verified for content preservation accuracy, the required middleware is made part of the setup procedure for that specific end user, which is used during the processing of PPF.

### Transmission of the Virtual Folder to a Remote Location

The virtual folder 14 may be sent to a web site portal 16 via common telecommunications means such as the Internet 17, VPNs (Virtual Private Networks), or other more dedicated higher transmission speed facilities such as T1 or T3 lines. If sending over public means such as the Internet, confidentiality of these documents will be a key issue. However, it is anticipated that for most customers, the use of the standard encryption features already incorporated in most web browsers will be deemed sufficient.

### Indexing the Digital Folder

Indexing will be accomplished by incorporating normal digital file structure and metadata associated with a standard Microsoft Windows computer index (folders, sub folders, and files). At a minimum captured index data would be the name of the file, the file type (e.g., doc, .ppt, .pdf, etc.), the time the file was created or last modified, the time that the file was received into the repository, and the name of the user and the user's organization. Additional information such as destruction review date, records management classification code, further user-defined description of the document, person, and organization, may be also submitted via a standardized input form by the end user to further assist the ease of retrieval. The index 18 created will be maintained in the on-line repository for view at any time by the end user. Secured access and confidentiality for this viewable index will be maintained in a similar fashion to that of submitting or retrieving documents. A search function is available so the user organization may search the listing of their files by the above listed index fields.

### Converting the Digital Folder to Analog

The digital image when received and properly indexed will be initially stored in an on-line document repository 20, then sent to a film server 22 where the any image decompressions or file format conversions will be made, if necessary, and then written out to a durable storage media such as film. This output will be accomplished via a high speed film writer 24 such as Kodak's Digital Document Archive Writer (DAW) Model 4800 where the image is displayed on a LED display one line of data at a time, and the image is projected through an 16 mm optical lens onto a specially sensitized film where the image is recorded.

### Storing the Analog Folder on a Long Term Storage Media

The analog files are placed on the film one by one in order dictated by the end user file folder structure. The image address is developed by a sequence of variously sized image or "blip" marks which parallels the various folder structure, e.g., directory\subdirectory\filename. After a roll is full of document images, normally 100 feet or 215 feet in length, the film is physically removed from the DAW, and the film is chemically processed in a typical continuous-strand type, medium or deep-tank microfilm processor 26. Processing is done per ANSI and ISO specifications on an extended-term storage media which has a Life Expectancy LE-500 rating such as Kodak Archive Storage Media 3459. A label writer 27 creates a label using index 18 information, which is placed on the film roll. The film rolls are then stored in a climate-controlled vault 28 under the conditions recommended by ISO/ANSI standards for extended-term (permanent) storage.

### Retrieving the Analog Folder

Retrieving the analog folder is somewhat the reverse of the process noted above. The end user logs onto the web-site portal via the normal process and enters a folder ID number or does a search of the on-line index of the documents that have been previously stored to obtain this reference number. This reference number is cross-referenced in a look-up table to obtain the roll number of film containing that folder and the retrieval request is passed to the film vault.

### Converting the Analog Folder to a Digital Format

The proper roll of film is retrieved from the vault, and inserted into a film scanner such as the Kodak Intelligent Microimage Scanner (IMS) 30 where the film folder is retrieved, film is scanned for all the images within that file folder, and the images are sent to the on-line document repository.

### Transmitting the Digital Folder to a Remote Location

A notice is sent back via e-mail to the end user informing them of the on-line availability of their folder. The end user can then retrieve this image folder back via the Internet or whatever telecommunications method was used to initially transmit the document image into the Preservation Center.

### Alternate Embodiments

It is an alternate embodiment of the present invention to periodically sweep the virtual folder for transmission to a remote location without customer action. For example, a host computer at the storage facility will send a transmission via portal 16 and Internet 17 to a host computer at the users facilities on which virtual folder 14 is stored. If virtual folder 14 has reached a predetermined size, as far as number of documents stored or megabytes of information, the folder is automatically retrieved and transmitted by Internet 17 portal 16 to the storage facility. The sweeps would be performed on a periodic basis, for example weekly, monthly, or quarterly depending on a predetermined agreement between the user and the operator of the storage facility. This adds another element of automation to the process which further reduces the work load for the user and the operator of the storage facility.

### Description of Setup Folder Process

End users create the content of the files or documents. They organize these files or documents in a meaningful sequence of folders. For example, a lawyer may group files or documents in a different folder for each of her clients. These are folders they will need to preserve. In a broad sense these end users may be grouped in two distinct classes, Commercial and Retail.

Commercial end users are typically different from a larger organization who will have an Information Technology/Infrastructure (IT/IS) infrastructure, fast Internet connection, and extensive policies and procedures for record retention management. The end users may only see a hot folder or network folder called "preservation folder." The end users only have to drag and drop their own folders, files, or documents into preservation folder to accomplish the preservation action. For more sophisticated installations, there may be more than one hot folder or network folder available to end users for different preservation purposes, e.g. contract preservation, tax preservation, intellectual property preservation etc.

The intermediatory called 'Aggregator' shields these commercial users from the details of setup and production process of preservation. On the retrieval side, these commercial end users can request list retrieval of actual file or document content retrieval. List retrieval request is for a list of all preservation folders (PPFs) or a list of folder, files, or documents structure within a specific PPF. The content retrieval request is for a specific PPF or a specific folder, file, or document within a chosen PPF. End users can choose a specific PPF by specifying PPF pre-defined fields or free text fields or they could choose a specific folder, file, or document with the chosen PPF by specifying names of folder, files, or documents within a specific PPF. These requests are made on a website maintained by the 'Aggregator.' The fulfillment of list or content retrieval request is through for example, "www.access," an email reply, a set of CDs, fax back, or a paper copy. Turn around time for the fulfillment is based on the purchased options.

The retail end users typically do not have any extensive in-house IT/IS or other infrastructure support. They may purchase these services from an external 'Aggregator' and receive most of the services enjoyed by the commercial end users. Otherwise, they can get services from the preservation services provider directly through an Internet access with a standard middleware support. They can purchase a PPF on the web and drag and drop their standard formatted folder, files, or documents into the purchased PPF on the web and submit the PPF at the session closing. The transaction is carried via standard encryption supported by web browsers.

On the retrieval side, they are carried out via Internet access through a secure website. Both 'list' and 'content' retrievals, as well as, different delivery mediums are supported. Based on the purchased options by the end user, the retrieval turnaround time is guaranteed to mean the availability of information at the website. Actual turnaround depends on the quality of network connection between the end user and ISP.

## Claims

1. A method for long term preservation of documents comprising the steps of:
saving at least one of said documents in digital form;
transferring said digital document to a virtual folder;
transmitting said virtual folder to a remote location;
indexing said digital folder;
converting said digital folder to an analog format; and
storing said analog folder on a long term storage media.

2. A method as in claim 1 comprising the additional steps of:
retrieving said analog folder,
converting said analog folder to digital format; and
transmitting said digital folder to a remote location.

3. A method as in claim 1 wherein said long term storage media is film.

4. A method as in claim 2 wherein a customer accesses index information prior to retrieving said stored analog folder.

5. A method as in claim 1 wherein said analog folder stored on said long term storage media is in human readable format.

6. A method as in claim 1 wherein said virtual folder is periodically swept for transmission to said remote location.

7. A method as in claim 1 wherein said long term storage media is labeled with index information in a virtual folder.
